Europäisches Patentamt

European Patent Office

Office européen des brevets

(11) Publication number: **0 421 036 A1**

# EUROPEAN PATENT APPLICATION

(21) Application number: 89310236.8

(22) Date of filing: 06.10.89

(51) Int. Cl.⁵: **H04N 5/38, H01P 5/16**

(43) Date of publication of application:
**10.04.91 Bulletin 91/15**

(84) Designated Contracting States:
**AT BE CH DE ES FR GR IT LI LU NL SE**

(71) Applicant: **THE MARCONI COMPANY LIMITED**
**The Grove Warren Lane**
**Stanmore Middlesex HA7 4LY(GB)**

(72) Inventor: **Binns, John Frederick Howard**
**14 Fifth Avenue**
**Chelmsford Essex CM1 4HD(GB)**

(74) Representative: **Loven, Keith James et al**
**GEC plc Patent Dept.(Chelmsford Office)**
**GEC-Marconi Research Centre West**
**Hanningfield Road**
**Great Baddow Essex CM2 8HN(GB)**

(54) **Device for adding R.F. signals.**

(57) A device for adding together first and second signals of the same coherent frequency but carrying different amplitude modulations, e.g. separate video picture and sync pulse modulated signals, comprises first and second linear couplers (14,15) connected in a Lorenz ring, with a phase shifter (16) in one arm controlled by a third signal comprising the same signal as the modulation of the second signal, e.g. a video sync pulse signal. The signals may thus be combined with substantially no loss.

EP 0 421 036 A1

# DEVICE FOR ADDING R.F. SIGNALS

This invention relates to a device for adding together r.f. signals, for example separate picture modulated and synchronisation pulse modulated carriers, and to a television transmitter including such a device.

In order to achieve greater reliability, there has been a move towards the adoption of transistor amplification in place of the klystron or other thermionic devices in television tranmitters. Although klystrons are now made which have a very long working life, the liquid cooling systems associated with klystrons require maintenance and can make the transmitter more prone to failure.

It is now conventional for the vision signal in a transmitter to include synchronisation pulses which represent the peak output of the transmitter, with picture signal therebetween, in which the highest continuous output power corresponds to an all black picture, at a level representing approximately 60% of the peak power. For a typical class AB transistor amplifier, the power efficiency for a vision signal consisting of black picture signal between the synchronisation peaks is of the order of 40%.

If the synchronisation pulses were amplified separately from the picture signal, the amplification efficiency could be increased, because in the case of the picture signal, the peak output can correspond to the black picture. This would increase the efficiency of the class AB transmitter amplifier to a value of the order of 50%. In the case of the synchronisation pulses, however, the increase in efficiency to be gained by separate amplification is much greater, since the pulse only occupies $4.7\mu s$ out of a $64\mu s$ line scan time.

A problem with the separate amplification of picture and synchronisation pulse modulated carriers is the efficient adding of the signals back together again. The present invention seeks to solve this problem.

According to the invention, there is provided a device for adding together first and second signals of the same coherent frequency but carrying different amplitude modulations, comprising a first directional coupler having a first input port for introduction of the first signal and a second input port for introduction of the second signal, a second directional coupler connected to the first coupler in a Lorenz ring, the second coupler having a load connected to one output port, and the second output port being connected to the output port for the device, and phase shifting means in one arm of the Lorenz ring for shifting the phase of the signal by an angle which varies in response to a third signal comprising the modulation of the second signal, whereby the signal at the output port of the device is the sum of the signals at the first and second input ports, with no more than a minor proportion of the input power being dissipated in the loads. Preferably, ignoring normal network losses, none of the input power is dissipated in the loads.

The second signal is preferably an intermittent signal, for example a separate synchronisation pulse modulated signal for a television vision signal.

The phase shifting means may suitably comprise a further directional coupler connected to capacitors whose capacitances are simultaneously variable in response to the third signal. Alternatively, the phase shifting means may comprise a circulator having connected to one port thereof a capacitor whose capacitance is variable in response to the third signal.

The invention also provides a television transmitter comprising modulation means for producing separate picture signal modulated and synchronisation pulse modulated carriers. amplifying means for separately amplifying the modulated carriers, and a signal adding device in accordance with the invention, arranged to add the separately amplified modulated carriers together.

The device of the invention can add together signals such as separate picture and synchronisation pulse modulated carriers with very high efficiency.

Reference is made to the drawings, in which:

Figures 1A and 1B show diagrammatically a device in accordance with the invention for use in adding a synchronisation pulse signal to a television picture signal, Figure 1A showing the conditions in the device between pulses. and Figure 1B showing conditions during input of a pulse;

Figure 2 shows diagrammatically one form of phase shifting arrangement suitable for use in the device of Figure 1;

Figure 3 shows diagrammatically another form of phase shifting arrangement suitable for use in the device of Figure 1:

Figure 4 illustrates diagrammatically a television transmitter in accordance with one preferred embodiment of the invention; and

Figures 5A and 5B show an alternative arrangement of the device shown in Figures 1A and 1B.

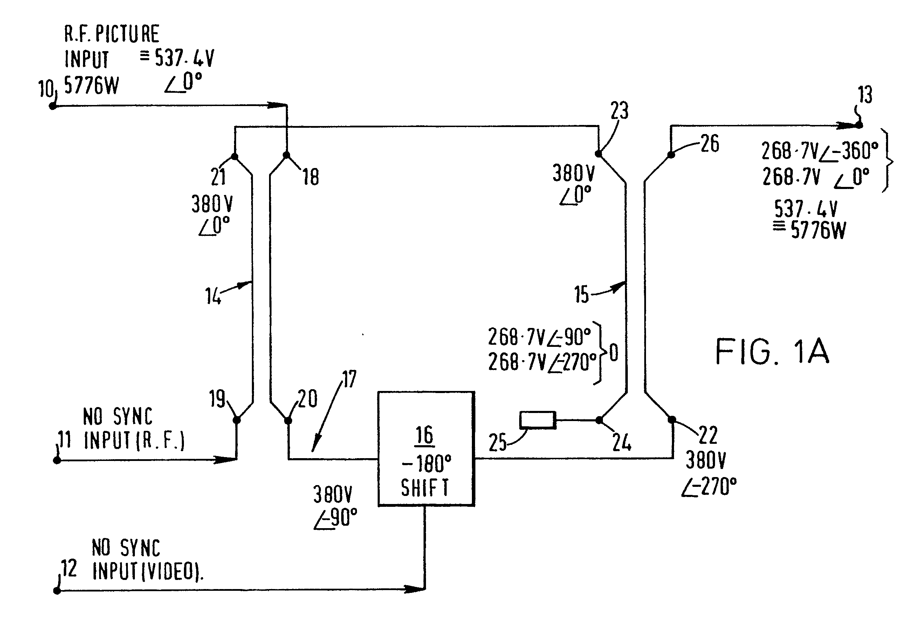

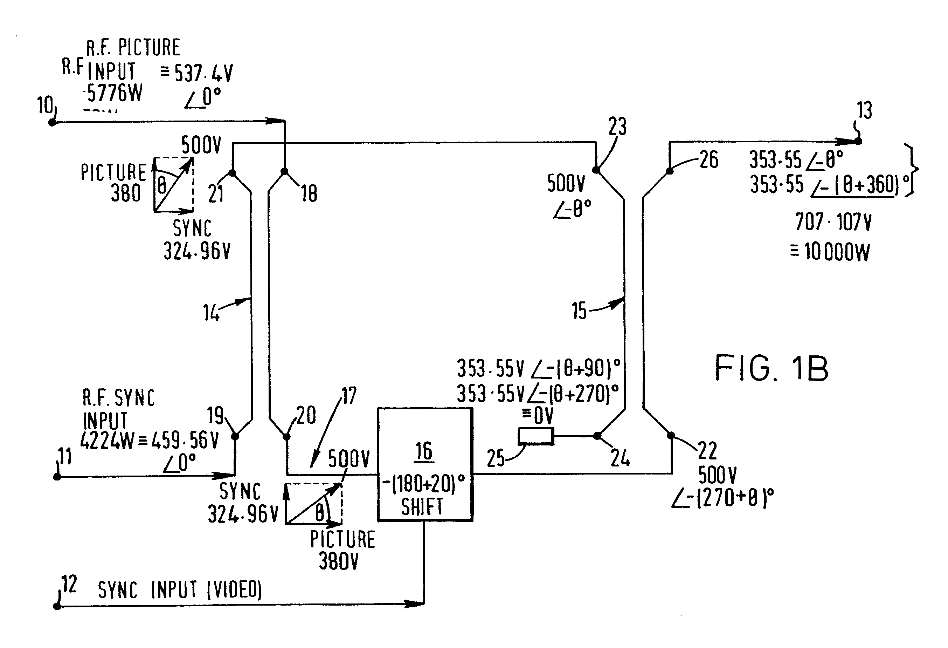

Referring to Figures 1A and 1B, the signal adding device has a picture signal modulated carrier input 10, a synchronisation pulse modulated carrier input 11, a synchronisation pulse signal input 12 and a signal output 13. First and second 3dB hybrid couplers 14 and 15 are connected together in a Lorenz ring with a phase shifter 16 in one arm 17 of the ring. The input 10 is connected to one input port 18 of the first coupler 14 while the input 11 is connected to the other input port 19. Each output port 20, 21 of the first coupler 14 is connected to a respective input port 22, 23 of the second coupler 15, that 20 adjacent to the input port 19 connected to input 11 being connected via the phase shifter 16. One output port 24 of the second coupler 15 is connected to a load 25 whose impedance matches that of the transmitter output (50 ohms), while the other output port 26 is connected to the signal output 13.

Considering, by way of illustration, use of the device in a 10kW television transmitter, the black picture voltage is 76% of the synchronisation (sync) pulse voltage, giving the required black picture power level as 5776W, and the necessary additional peak sync pulse power as 4224W. The corresponding voltages for 50 ohm impedance are approximately 537.4V and 459.6V respectively. Taking the case where no sync pulse is present (Figure 1A), and assuming a reference phase angle at the input port 18 of $0°$, the voltage at the adjacent output port 21 will have a value of $537.4/\sqrt{2} = 380V$, with the same phase angle ($0°$). At the opposite output port 20, the voltage is again 380V, but the phase angle, assuming the coupling length to be $\lambda/4$. where $\lambda$ is the carrier wavelength, will be $-90°$. Taking the position at the second 3dB hybrid coupler 15, and assuming a phase angle at the input port 23 to be still $0°$, in order to obtain no output at the load 25, but full power at the output 13, the signal component at the output port 26 due to the output from the phase shifter 16 must be in phase with that due to the input to the input port 22. As the second coupler 15 is identical to the first coupler 14, the phase angle of the signal at output port 26 due to the signal at the input port 23 is $0°$, with the voltage being $380/\sqrt{2} = 268.7V$. Therefore, the relative phase angle of the signal at the input port 22 must be $-270°$ to give $-360°$ at the port 26.

Equally, the voltages at the load 25 must be $180°$ out of phase. The voltage due to the signal input at the port 23 will have a phase angle of $-90°$ relative to its input phase. The voltage due to the signal input at the port 22 will be in phase with the input signal, i.e. at $-270°$. Thus, the resultant voltage at the load is 0 and all the picture signal power, 5776W, is output at 13 (assuming an ideal system with no losses). It will be seen, therefore, that the phase change in the arm 17 of the Lorenz ring must be $-180°$ relative to that on the other arm.

Taking now the situation when a sync pulse signal is present in the input 11, while a black picture signal is present in the input 10, and taking both signals to have an inital phase angle of $0°$, vector analysis of the compound voltages present at port 21 due to the picture and sync pulse signals input to the coupler at ports 18 and 19 shows that the resultant voltage peak is 500V, with a phase angle $-\theta$ ($-40° 32'$). At port 20, the resultant voltage is also 500V, but the phase angle is $-(90- \theta)° - (49°28')$, Again assuming no phase change between port 21 and port 23, the phase angle remains $-\theta°$ and thus the component at the output 26 due to this will be $500/\sqrt{2}$ 353.55V at the same phase angle $-\theta°$. The component due to the input at port 22 must be in phase for full power output, and thus must have a resultant phase angle of $-(\theta + 360)°$. Since the phase change in the coupler is $-90°$ the phase at the input port 22 must be $-(\theta + 270)°$. It will be noted that the component of this signal appearing at the load would be $500/\sqrt{2} = 353.55V$ with the same phase angle, while the component due to the signal at the input port 23 would be 353.55v at $-(\theta + 90)°$ which, being $180°$ out of phase with the other component, results in no power being output to the load.

It will be seen that the composite modulated signal at the output 13 suffers a carrier phase change of $40° 32'$ during the sync. pulse.

This is very similar to the behaviour of a beam pulsed klystron amplifier and the circuitry used for correcting this phenomenon is equally suitable for correction of a transmitter embodying the invention here described.

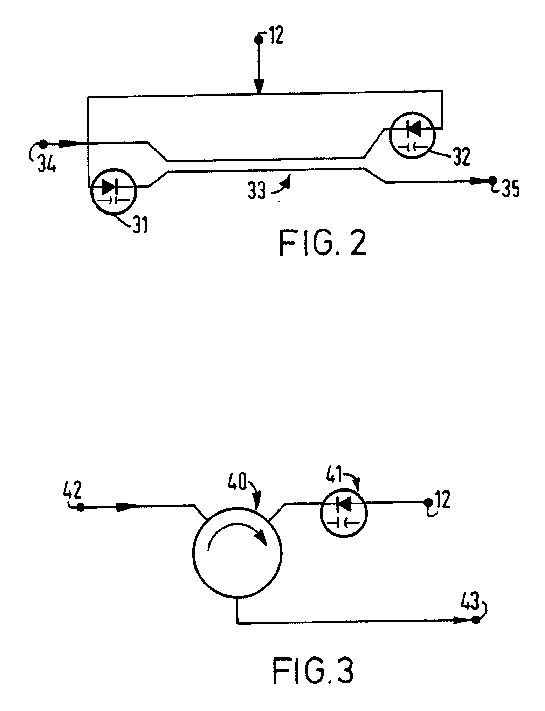

Referring now to Figure 2, one embodiment of the phase shifter for use in the device of the invention consists of a pair of varactors 31, 32 simultaneously supplied with a signal from the synchronisation pulse input 12. A 3dB hybrid coupler 33 has its input port 34 as the input of the phase shifter, and its output port 35 as the output of the phase shifter, with the varactors 31, 32 being connected to the other two ports. Taking the varactors 31, 32 as identical pure reactances producing a reflected wave lagging the incident wave by $\Phi°$, and the reference phase angle of the input voltage at 34 as $0°$, the voltage incident at varactor 31 is in phase with the input, while that at varactor 32 lags the input voltage by $90°$. Reflection from varactor 31 has a phase angle of $-\theta°$ while reflection from varactor 32 has a phase angle of $-90°-\Phi°$. At the output 35, the two components both give rise to signals having a phase angle $-90°-\Phi°$ and thus add, while at the input 34 the two components are 1800 out of phase and cancel. Changing the reactances equally by way of the input of a synchronisation pulse signal to each varactor changes $\Phi°$.

Figure 3 shows a second embodiment of the phase shifter for use in the device of the invention, ' comprising a circulator 40 with two ports 42, 43 serving as the input and output to the phase shifter 16 (Figure 1) and the third port being connected to a varactor 41 which is supplied with a signal from the synchronisation pulse output 12. Again, since the varactor 41 can be considered as a variable pure reactance, the angle between the incident and reflected wave is dependent on the reactance value. Hence, changing the value of the reactance by applying the synchronisation signal to the varactor 41 changes the phase of the output relative to the input.

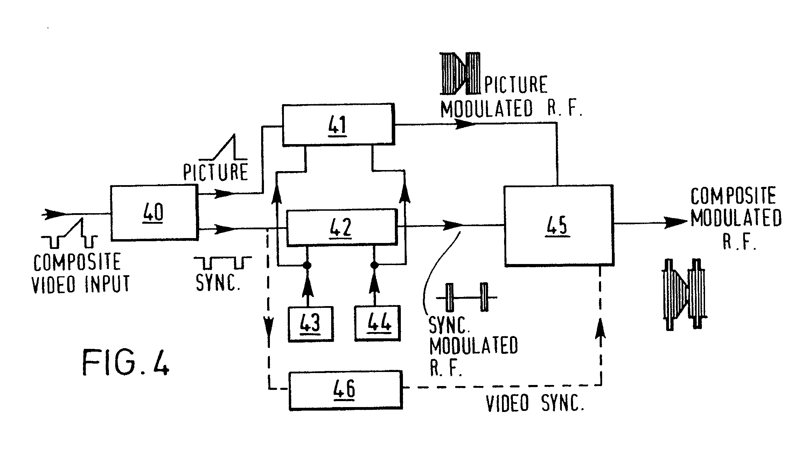

A television transmitter in accordance with a preferred embodiment of the invention is illustrated diagrammatically in Figure 4. Only the video signal stages are shown, as the sound signal stages are conventional and the design of these is well-known. A composite video signal is input to a video processing unit 40 which separates the picture and synchronisation pulse (sync) components, in a manner known for conventional television transmitters. The resulting separate signals are passed to respective separate modulation, frequency changing and amplification stages 41 and 42 having inputs from common intermediate frequency 43 and heterodyne 44 oscillators. The separate amplified picture modulated and sync modulated r.f. signals are passed to the device 45 of the invention, for example as illustrated in Figures 1A and 1B. A portion of the separate video sync signal is passed via a video delay adjuster 46 to the phase shifter of the device 45, the delay adjuster 46 ensuring that the signals are in time coincidence at the input ports to the device.

In a transmitter according to an alternative embodiment, after the modulation and frequency changing stages, the picture modulated and sync pulse modulated r.f. signals are each split, by known signal splitting means, into a plurality of equal separate signals which are in turn separately amplified. Each amplified picture modulated r.f. signal is then combined with an amplified sync. pulse modulated r.f. signal in a separate signal adding device according to the invention, a video sync signal being provided to each signal adding device as previously described. The composite modulated r.f. signals are then readily combined in a known signal combining device, as the signals are all identical, to provide the final video modulated signal to be fed, after combining with the sound signal in conventional manner, to the antenna.

While the invention has been particularly described with reference to the use of 3dB hybrid couplers, there are advantages in using alternative value couplers.

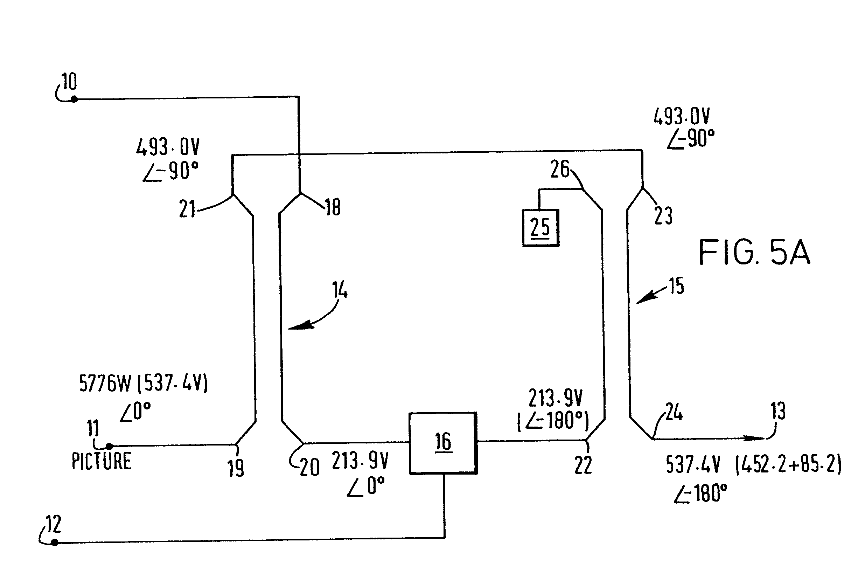

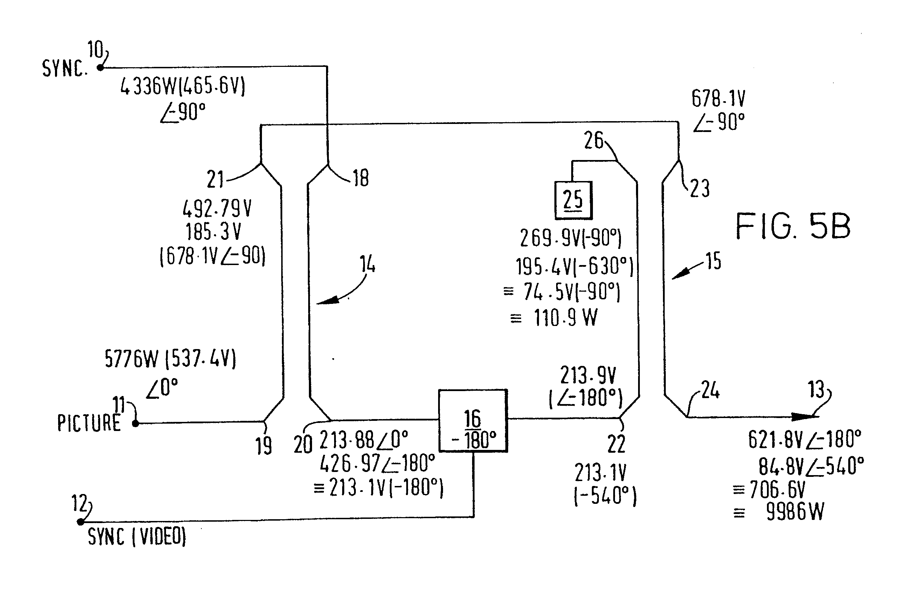

For example if 8dB couplers are used as shown in Figures 5A and B, two advantages result:

    1. The amount of power in the phase shifter arm is reduced to approximately 20% of the 3dB coupler device, and

    2. There is no phase difference between the output signal during sync and that during picture.

The reason for this is that the summation of the picture and sync powers is now dependent on the choice of directional coupler values as well as the phase network.

Figure 5A shows the situation during picture and Figure 5B that during sync.

In this arrangement, the picture signal modulated carrier is input at port 11, and the synchronisation pulse modulated carrier (sync) is input at port 10. Additionally, at the second coupler 15, the load 25 is connected to port 26, and the output port 13 to port 24.

Considering the 8dB couplers 14 and 15, the voltage incident at ports 19 and 23 is multiplied by a factor of 0.917 to ports 21 and 24 respectively and by a factor of 0.398 to ports 20 and 26 respectively.

The same factors apply between ports 18, 20 and 22, 26 and 18, 21 and 22, 24 respectively.

The 5776 watts picture (black) input at port 11 is approximately 537.4 volts in 50 ohms. This produces 493.0 volts at port 21 and 213.9 volts at port 20.

The line lengths connecting the two couplers, 14 and 15 and the phase adjuster, 16 are arranged such that the signals from coupler 14 arrive at coupler 15 with a phase relationship which gives addition at port 24 and subtraction at port 26.

The 493.0 volts at port 23 produces 452.2 volts at port 24 and the 213.9 volts at port 22 produces 85.2 V, a total of 537.4 volts.

In other words, when correctly phase adjusted because of the two identical couplers, all the input power is delivered to the output port, 13.

Now consider Figure 5B. The modulated sync input at 10 is arranged such that the signal at port 18 is in quadrature with the picture input to port 19 (90° lagging). In this way the components of the two inputs add at port 21 and subtract at port 20.

The 4336 watts sync is equivalent to approximately 465.6 volts in 50 ohms. The signal at port 21 is therefore 537.4 x 0.917 + 465.6 x 0.398 = 678.1 volts. The signal at port 20 is 465.6 x 0.917 - 537.4 x 0.398 213.1 volts.

It should be noted that, because the sync signal is the larger, the phase of the 213.1 volts at port 20 is 180 degrees lagging the signal that is present during the picture region. During the sync period it is therefore necessary for the phase shifter 16 to switch in 180 degrees to ensure signals still sum at output port 26 and hence at the device output, 13.

Considering the output coupler 15, the 678.1 volts at port 23 produces 621.8 volts at port 24 and the 213.1 volts at port 22 produces 84.8 volts at port 24. The sum at the output, 13 is therefore 706.6 volts. This produces 9986 watts in 50 ohms.

This signal has the same phase relationship as the picture signal analysed with Figure 1A.

It will be seen that the voltage on the line between ports 20 and 22 including phase adjuster 16 is very nearly equal in the two operating conditions. The power in this line is approximately 915 watts.

In the case of the first embodiment of the invention using 3 dB couplers, described with reference to Figures 1A and 1B, the power handled by the phase shifter 16 is 5000 W during the sync pulses and 2888 watts during picture (black).

The device using 8 dB couplers gives the minimum power in the phase adjuster line but it does give a small loss in the balance load at port 24. This is 678.1 x 0.398 - 213.1 x 0.917 = 74.5 volts. This is 110.9 watts during sync. Because this exists for 4.7μs in each 64μ s the continous lost power is only approximately 8 watts. A further advantage with this arrangement is that any losses in the phase shifting network 16 do not seriously affect the overall losses.

Using 9 dB couplers reduces the power wasted in the load by about 5 to 1 but at the expense of more power in the phase adjuster line.

## Claims

1. A device for adding together first and second signals of the same coherent frequency but carrying different amplitude modulations, comprising a first directional coupler having a first input port for introduction of the first signal and a second input port for introduction of the second signal, a second directional coupler connected to the first coupler in a Lorenz ring, the second coupler having a load connected to one output port, and the second output port being connected to the output port for the device, and phase shifting means in one arm of the Lorenz ring for shifting the phase of the signal by an angle which varies in response to a third signal comprising the modulation of the second signal, whereby the signal at the output port of the device is the sum of the signals at the first and second input ports, with no more than a minor proportion of the input power being dissipated in the loads.

2. A device according to Claim 1, wherein substantially none of the input power is dissipated in the loads.

3. A device according to Claim 1 or 2, wherein the second signal is an intermittent signal.

4. A device according to Claim 3, wherein the second signal is a regular pulsed signal.

5. A device according to Claim 4, wherein the first signal is a television picture modulated carrier, and the second signal is a carrier modulated with the synchronisation pulses for the television picture.

6. A device according to any preceding claim, wherein the phase shifting means comprises a further directional coupler connected to capacitors whose capacitances are simultaneously variable in response to the third signal.

7. A device according to any of Claims 1 to 5, wherein the phase shifting means comprises a circulator having connected to one port thereof a capacitor whose capacitance is variable in response to the third signal.

8. A television transmitter, comprising modulation means for producing separate picture signal modulated and synchronisation pulse moudulated carriers, amplifying means for separately amplifying the modulated carriers, and a signal adding device according to any preceding claim arranged to add the separately amplified modulated carriers together.

9. A television transmitter according to Claim 8, wherein the modulation means comprises signal splitting means for dividing each signal between a respective plurality of separate signal paths, amplifying means are provided for each signal path, one of said signal adding devices for each picture signal path, and combining means for combining the signals output by the signal adding devices, the comined signal being directed to an antenna.

R.F. PICTURE
INPUT $\equiv 537.4V$
10, 5776W $\angle 0°$

23

13

26

$268.7V \angle -360°$
$268.7V \angle 0°$

$\dfrac{537.4V}{\equiv 5776W}$

21  18

380V $\angle 0°$

380V $\angle 0°$

14

15

$268.7V \angle 90°$
$268.7V \angle 270°$ } 0

FIG. 1A

19  20  17

NO SYNC
11 INPUT (R.F.)

$\underline{16}$
$-180°$
SHIFT

25  24  22
380V $\angle -270°$

380V $\angle 90°$

NO SYNC
12 INPUT (VIDEO).

FIG. 1B

FIG. 2

FIG.3

FIG. 4

FIG. 5A

493·0V
∠-90°

493·0V
∠-90°

21          18

26
25          23

14          15

5776W (537·4V)
∠0°

213·9V
(∠-180°)

11
PICTURE          19          20   213·9V
∠0°          16          22          24          13

537·4V  (452·2+85·2)
∠180°

12

EP 0 421 036 A1

FIG. 5B

SYNC. 10

4 336W (465.6V)
∠ 90°

678·1V
∠-90°

26

21    18

25

492·79V
185·3V
(678·1V ∠-90)

269·9V(-90°)
195·4V(-630°)
≡ 74·5V(-90°)
≡ 110·9 W

14

23

15

5776W (537·4V)
∠ 0°

213·9V
(∠-180°)

11
PICTURE

24

13

19    20   213·88 ∠ 0°
426·97 ∠ -180°
≡ 213·1V (-180°)

16
-180°

22

621·8V ∠ -180°
84·8V ∠ -540°
≡ 706·6V
≡ 9986W

213·1V
(-540°)

12
SYNC (VIDEO)

EP 0 421 036 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 517 317 (SIRE) * Figure 1; column 4, line 23 - column 5, line 36 * | 1-4 | H 04 N 5/38 H 01 P 5/16 |
| Y |  | 6,7 |  |
| X | US-A-4 723 307 (CLARK & SCHMITZ) * Figure 1a; column 5, lines 25-59 * | 1 |  |
| Y | MICROWAVE JOURNAL, vol. 22, no. 3, March 1979, pages 48-50,84, Dedham, US; S. HOPFER: "Analog phase shifter for 8-18 Ghz" * Figure 1; page 48, left-hand column * | 6 |  |
| Y | US-A-4 153 886 (MEIDEMA) * Figure 2; column 3, line 45 - column 4, line 12 * | 7 |  |

TECHNICAL FIELDS
SEARCHED (Int. Cl.5)

H 04 N
H 01 P
H 03 C

The present search report has been drawn up for all claims

| Place of search | Date of completion of the search | Examiner |
|---|---|---|
| THE HAGUE | 18-05-1990 | PEETERS M.M.G. |

EPO FORM 1503 03.82 (P0401)